# EUROPEAN PATENT APPLICATION

(11) **EP 2 477 059 A1**
(43) Date of publication of application: **18.07.2012**
(21) Application number: 11275010.4
(22) Date of filing: 14.01.2011
(51) Int. Cl.: G02B 27/01, G06F 3/048, G06F 19/00

(54) **An Apparatus for Presenting an Image and a Method of Presenting the Image**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A display system comprises a display (30), for example a head mounted display, a processor (40) for calculating the orientation of an object relative to a user of the display, and an image (5) generator (44) configured to generate an image for the display. The image (5) comprises a first view (4a) of the object in a first plane, and a second view (4b) of the object in a second plane, the first and second planes being at an angle relative to each other. The first and second views are orientated in the image such that they are shown at said angle relative to each other, and the image generator (44) is responsive to the output of the processor (40), such that the image (5) is orientated in dependence on the orientation of the object relative to the user.

## Description

### Technical Field

The present invention relates to a method of presenting an image to a user, preferably of a head-mounted display, and to a system for implementing the method.

### Background of the Invention

It is well known to obtain sectional images through an object. For example an MRI scan typically takes a multiplicity of 'slices' through an object at differing depths in three orthogonal planes. These sectional images are typically presented in one of two ways. Firstly, one or more views in each plane may be displayed independently (for example side-by-side on a monitor screen). The viewer can be confident he is looking at the correct, unmanipulated, data (see below), but the viewer tends to require significant skill to correctly interpret the images.

An alternative method of presenting the sectional images is for a computer to combine the multiplicity of views taken in the scan, and to generate an image that is a single slice at a particular depth and orientation within the scanned area. This single image may be relatively easy to interpret. However, the gap between the 'slices' in the original data can be quite large, and the computer-generated image can therefore include a significant amount of data that have been generated by interpolating between the data in adjacent slices. The computer-generated image may therefore not necessarily represent the true view at that location. Developments in technology have sought to increase the slice density, but limitations have still been found to exist.

### Summary of the Invention

The present invention seeks to overcome, or at least mitigate some of the above-mentioned disadvantages.

According to a first aspect of the invention, there is provided a method of presenting an image on a display to a user, comprising the steps of: calculating the orientation of an object, relative to the user, presenting, on the display, an image related to the object, the image comprising a first view of the object in a first plane, and a second view of the object in a second plane, the first and second planes being at an angle relative to each other, and the first and second views being orientated in the image such that they are shown at said angle relative to each other, and wherein the image is orientated in dependence on the orientation of the object relative to the user. By presenting the image in this manner, the user can more readily interpret the image because the first and second views may be shown in their relative orientations in real space and the orientation of the image is altered in the event of movement of the user and/or movement of the object. Furthermore, in embodiments in which the views are, for example, MRI scan views, the user can be confident that he is looking at the raw data that has not been interpolated.

The image is preferably orientated such that it corresponds (either approximately or exactly) to the orientation of the object in the user's field of view, relative to the user.

It will be appreciated that the image is typically a 2D representation. Reference to the views being orientated in the image at an angle to each other will be understood to mean, in a 2D representation, that the views are simply shown in such as way that they appear to be angled in such a way to each other (even if, strictly speaking, the views are not angled in real space).

The steps in the method need not necessarily be conducted in the order shown. One or more steps may be in a different order, or combined into a single step. For example the views may be orientated in the image (such that they are shown at said angle relative to each other) and the image may orientated in dependence on the orientation of the object, as a single step with no intermediate image being created.

The display is preferably at a location in, or close to, the user's field of view. The user is preferably a user of a head-mounted display and the image is preferably presented on the head-mounted display.

The image may comprise a third view of the object in a third plane, the third plane being at an angle relative to the other planes. The third view is preferably orientated in the image such that it is shown at said angle relative to the other views. Having three views is thought to be particularly beneficial because the views may be in three mutually orthogonal planes through the object, thereby allowing data in all three dimensions to be viewed. In principle, the image may comprise one or more further views of the object, each further view being in a further plane at an angle to the other planes, and each further view being orientated in the image such that it is shown at said angle relative to the other views.

The planes may be at any angle to each other (i.e. non-parallel to each other). The planes are more preferably orthogonal.

The views are preferably non-destructive sectional views through the object. For example, the views may be Magnetic resonance imaging (MRI) scan views through planes in the object.

At least one of the views of the object may include additional data that has been added to the view. For example, a vector or marker may be added to the view. The additional data is preferably conformally added to the view (i.e. the additional data preferably overlays the point or region on the view that it relates to).

The orientation of the object may be calculated relative to the position of the user's head. The image may be orientated in dependence on the orientation of the object relative to the position of the user's head. The orientation of the object may be calculated relative to the position and the orientation of the user's head; in this case the image may be orientated in dependence on the orientation of the object relative to the position and the orientation of the user's head. The method may comprise the step of sensing the position of the user and/or the object.

According to a second aspect of the invention, there is provided a display system, the display system comprising: a display, a processor for calculating the orientation of an object relative to a user of the display, and an image generator configured to generate an image for the display, the image comprising a first view of the object in a first plane, and a second view of the object in a second plane, the first and second planes being at an angle relative to each other, and the first and second views being orientated in the image such that they are shown at said angle relative to each other, and the image generator being responsive to the means for calculating the orientation of the object, such that the image is orientated in dependence on the orientation of the object, relative to the user. The display is preferably a head-mounted display.

The system may comprise a sensor configured for sensing the position of the user's head. The system may comprise a sensor configured for sensing the position of the object. The same sensor may be configured for sensing the position of the user's head, and for sensing the position of the object. The sensor may include a camera, or more preferably a plurality of cameras. The plurality of cameras are preferably distributed within a structure (for example a room) in which the object is located. The sensor may be arranged to generate an image from which the position of the object and/or user may be determined.

The processor and image generator may be one or more computers. The processor and image generator may be the same computer.

According to a further aspect of the invention, there is provided a display system, the display system comprising: a display, a first module, for example a computer or part of a computer, arranged to determine the field of view of a user of the display, a second module, for example a computer or part of a computer, arranged to calculate the orientation of an object in the field of view, relative to the user, and a third module arranged to generate an image for the display, the third module for generating the image being configured to generate an image comprising a first view of the object in a first plane, and a second view of the object in a second plane, the first and second planes being at an angle relative to each other, and the first and second views being orientated in the image such that they are shown at said angle relative to each other, and the third module being responsive to the second module for calculating the orientation of the object, such that the image is orientated in dependence on the orientation of the object in the field of view, relative to the user.

It will be appreciated that features described with reference to one aspect of the invention are equally applicable to another aspect of the invention, and *vice verso.*

### Description of the Drawings

An embodiment of the invention will now be described, by way of example only, with reference to the accompanying schematic drawings of which:
Figure 1 shows a system according to a first embodiment of the invention;
Figure 2 illustrates the operation of part of the system of Figure 1;
Figure 3 illustrates the operation of another part of the system of Figure 1;
Figure 4 shows views in an external data domain;
Figure 5 shows the image presented on the head-mounted display in the first embodiment.

### Detailed Description

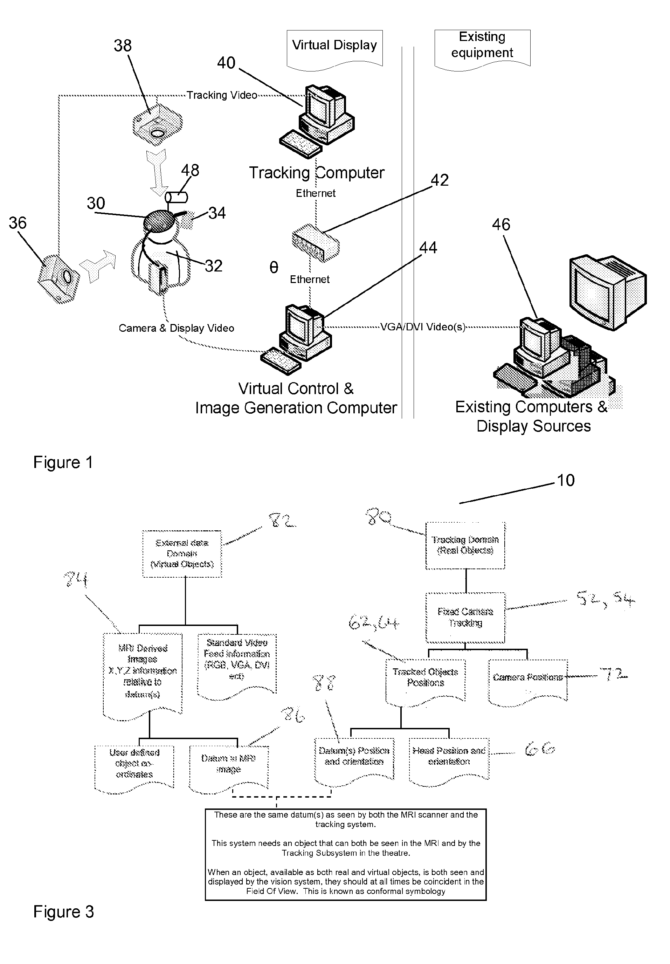

Referring to Figure 1, the system comprises a head-mounted display (HMD) 30 worn by the user 32, who in this embodiment is a neurosurgeon operating on a patient's brain (not shown in Figure 1). The HMD is known per se, and projects an image onto a screen 34 in front of one of the user's eyes. The screen is transparent so that the user can view the real world through it. If preferred, the screen can be in the form of a transparent visor so that the image can be positioned to be presented to both eyes of the user.

The HMD can be mounted directly on to the user's head e.g. by a simple webbing cradle, or it can be embodied in or on a helmet for example if head protection is required in an industrial or otherwise hazardous environment. However the HMD is configured, it bears conspicuous patterns so that movements of the user's head can be tracked by one or more tracking video cameras 36, 38. In some circumstances one camera may be sufficient, but two or three are preferred so that inaccuracies or ambiguities in the tracked position and orientation of the user's head can be more easily resolved.

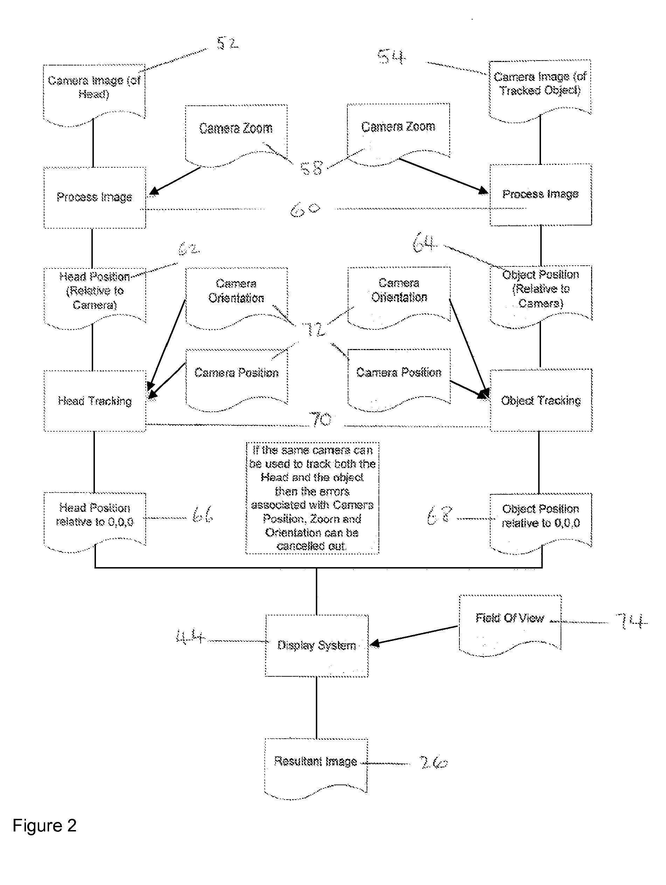

The video outputs of the cameras 36, 38 are supplied to a tracking computer 40 which is programmed to determine from the tracked head movements the spatial position of the user's head, and the orientation of the user's head. Figure 2 shows the operation of a tracking camera 36 or 38 in more detail. The camera produces a tracking image containing the markers 52 on the user's HMD. Also within that tracking image are similar markers 54 at fixed positions in the work site. In the first embodiment of the invention, the markers 54 in the work site are attached to the patient's head, and to the structure which holds it in a fixed position. The camera has a zoom function 58, operable so that the markers 52, 54 are of adequate size in the image. The zoom setting of the camera is fed into the image processing function, 60 in the tracking computer 40, whereby the positions 62 of the user's head and the position 64 of the work site relative to the camera can be determined. Angular position is determined from the orientation of the patterns 52, 54, and their distance from the camera from the size of the patterns in the camera image (the smaller the pattern appears, the further away it is). The zoom function can be omitted if preferred, in order to avoid any inaccuracy in measuring the zoom setting.

The positions 66, 68 of the user's head and of the work site relative to the origin or datum (0,0,0) of a fixed Cartesian (X,Y,Z) frame of reference are determined by adding the camera position and orientation 72 to the relative head and work site positions 62, 64. It will be appreciated that by using the same camera to track both the head and work site positions, errors in the camera location, orientation and zoom which would arise if separate cameras were used can be cancelled-out.

Knowledge of the position and orientation of the user's head and the position of the patient's head in the work site enables the tracking, computer 40 to determine the field of view 74 of the user, and to determine the orientation of the patient's head in the work site, relative to the user.

Referring back to Figure 1, the tracking computer 40 communicates the information regarding the positions of the user's head and the work site, and the information regarding the orientation of the patient's head relative to the user, via an Ethernet or other LAN 42, to a virtual image generation computer 44. This computer is configured to provide a virtual image to the HMD 30. The computers 40, 44 can of course be replaced by a single unit with suitable parallel-processing capability, or multiple units each processing different stages/elements of the calculations.

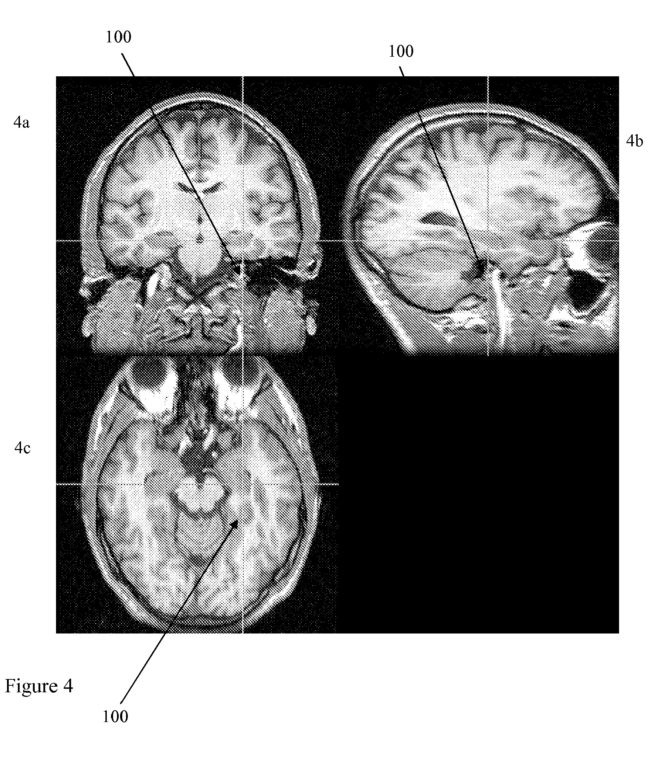

Figures 3 to 5 show how the image generation computer 44 operates. The computer 44 accesses an external data domain 82. The external data domain contains views and vector data 84 derived from three-dimensional scanning techniques such as MRI or CT. The data domain contains a multiplicity of views, at increasing depths through the object, in three orthogonal planes (i.e. sectional views through the patient's height, from front to back, and from side to side). Prior to operating, the neurosurgeon specifies a particular view 4a, 4b, 4c in each plane (shown in Figure 4) which he considered to best show the region to be operated on. He marks the centre of the region to be operated on as the intersection of cross-hairs 100, which, in this embodiment, is the centre of a brain tumour.

The image generation computer 44 creates an intermediate image from the views 4a, 4b and 4c. This intermediate image presents the views 4a, 4b, 4c in the image such that they are shown orthogonal to one another, and intersecting at the centre of the region to be operated on 100. Using known techniques, the views cropped and presented in the foreground/background as appropriate. In a different embodiment, the views are cropped in the final, orientated, image (see below).

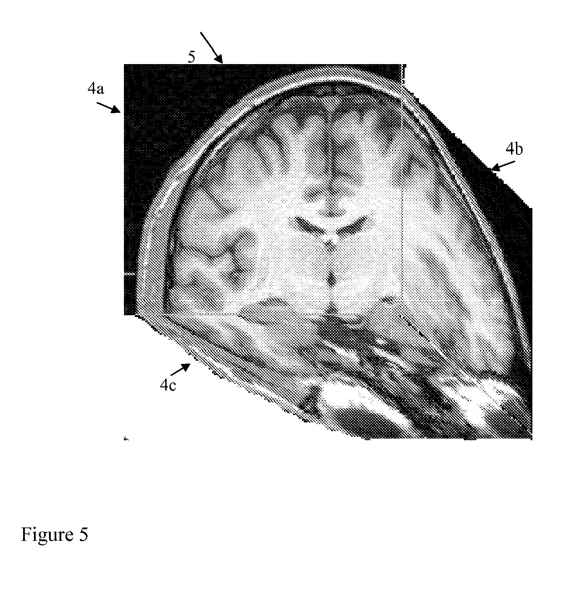

Using the information received from the tracking computer 40 specifying the orientation of the patient's head in the work site, relative to the user, the image generation computer 44 modifies the intermediate image to orientate it such that it at least approximately corresponds to (i.e. is within + or -10 degrees of) the orientation of the object in the field of view of the user. This orientated image 5 is shown in Figure 5. The image is refreshed at between 10-15Hz and has a latency of less than 200ms.

The image generation computer displays the orientated image 5 on the HMD. The user may thus easily see each MRI view 4a, 4b, 4c at an orientation that corresponds to the orientation of the patient's head in front of him (it will be appreciated that the orientation of the image and the patient's head need not match exactly to fall within the scope of the present invention). In addition, the user can be confident that the data presented in the image is the raw (uninterpolated) data from the original MRI views. The image 5 may be displayed on the HMD in a variety of different ways. For example, the image could be displayed conformally or Picture in Picture (PIP).

In a further embodiment (not shown), the MRI views include additional data added conformally to the views. For example, the views may show mesh volumes marked out by the surgeon in advance, which overlay the area(s) to operate on.

In yet another embodiment, the display is a monitor display located to one side of the patient's head. In addition, the system is arranged to only measure the position (but not orientation) of the user's head. Thus, the image presented is orientated in dependence on the orientation of the object relative to the user's head position, but not necessarily relative to where the direction the user is looking.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A display system, the display system comprising:
a display,
a processor for calculating the orientation of an object relative to a user of the display, and
an image generator configured to generate an image for the display, the image comprising a first view of the object in a first plane, and a second view of the object in a second plane, the first and second planes being at an angle relative to each other, and the first and second views being orientated in the image such that they are shown at said angle relative to each other, and the image generator being responsive to the output of the processor, such that the image is orientated in dependence on the orientation of the object relative to the user.

2. A system according to claim 1, comprising a sensor configured for sensing the position of the user's head.

3. A system according to claim 2, wherein the sensor is configured for sensing the orientation of the user's head.

4. A system according to any of claims 1 to 3, comprising a sensor configured for sensing the position of the object.

5. A system according to any of claims 2 to 4, wherein the sensor includes a camera for generating an image from which the position of the object and/or user may be determined.

6. A system according to any of claims 1 to 6, wherein the display is a head-mounted display.

7. A method of presenting an image on a display to a user, comprising the steps of:
calculating the orientation of an object relative to the user,
presenting, on the display, an image related to the object, the image comprising a first view of the object in a first plane, and a second view of the object in a second plane, the first and second planes being at an angle relative to each other, and the first and second views being orientated in the image such that they are shown at said angle relative to each other,
and wherein the image is orientated in dependence on the orientation of the object relative to the user.

8. A method according to claim 7, wherein the image comprises a third view of the object in a third plane, the third plane being at an angle relative to the other planes, and the third view being orientated in the image such that it is shown at said angle relative to the other views.

9. A method according to claim 7 or claim 8, wherein the planes are orthogonal.

10. A method according to any of claims 7 to 9, wherein the views are sectional views through the object.

11. A method according to claim 10, wherein the views are MRI scan views.

12. A method according to any of claims 7 to 11, wherein the orientation of the object is calculated relative to the position of the user's head, and the image is orientated in dependence on the orientation of the object relative to the position of the user's head.

13. A method according to claim 12, wherein the orientation of the object is calculated relative to the position and the orientation of the user's head, and the image is orientated in dependence on the orientation of the object relative to the position and the orientation of the user's head.

14. A method according to any of claims 7 to 13, comprising the step of sensing the position of the user and/or the object.

15. A method according to any of claims 7 to 14, wherein the display is a head-mounted display.
